# EUROPEAN PATENT APPLICATION

(11) **EP 4 653 806 A1**
(43) Date of publication of application: **26.11.2025**
(21) Application number: 25177215.8
(22) Date of filing: 19.05.2025
(51) Int. Cl.: G01B 11/06, G01N 21/86, H01M 4/04

(54) **MEASUREMENT APPARATUS, MEASUREMENT METHOD, AND MEASUREMENT PROGRAM**

(30) Priority: 20.05.2024 JP 2024082075
(71) Applicant: Yokogawa Electric Corporation, Tokyo 180-8750 (JP)
(72) Inventor: ITO, Yoshinori, Musashino-shi, Tokyo, 180-8750, (JP)
(74) Representative: Winter, Brandl - Partnerschaft mbB

(57) **Abstract**

A measurement device (10) collects, from each of detection devices (20) installed in a conveyance direction of a measurement object having a reference marker (M), each of detection results of the reference marker (M) detected by the respective detection devices (20), and calculates, based on the collected detection results, an inter-device distance that indicates an interval at which each of the detection devices (20) is installed.

## Description

### FIELD

The present invention relates to a measurement apparatus, a measurement method, and a measurement program.

### BACKGROUND

A battery electrode sheet (hereinafter, appropriately referred to as an "electrode sheet") is a sheet obtained by thinly coating a mixture, such as an active material, on a metal foil, and drying the obtained electrode sheet. In a process of manufacturing the electrode sheet, a positive electrode slurry (liquid mixture) and a negative electrode slurry (liquid mixture) are applied to the surface of an aluminum foil and a copper foil, respectively. In a coating schedule described above, in a case where a coating amount of the slurry is measured, a detection device calculates each of a thickness, a weight, and the like of the sheet before and after a coating process is performed, and the coating amount is obtained from the difference therebetween (see, for example, Japanese Laid-open Patent Publication No. 2011-196755).

In a production line of the electrode sheet, or the like, in order to accurately obtain the coating amount after the coating process, there is a need to match loci of positions detected by the respective detection devices that are installed at different installation positions, by using an installation position of each of the detection devices and a conveyance speed of the electrode sheet. However, in the actual production line, it is difficult to accurately obtain the installation position and the relative distance of each of the detection devices located on the path through which the electrode sheet is sent out.

Accordingly, the present invention has been conceived in light of the circumstances described above and an object thereof is to simply obtain an installation position of each detection device included in a production line.

### SUMMARY

According to an aspect of the embodiments, a measurement apparatus includes a collection unit that collects, from each of detection devices installed in a conveyance direction of a measurement object having a reference marker, each of detection results of the reference marker detected by the respective detection devices, and a calculation unit that calculates, based on the collected detection results, an inter-device distance that indicates an interval at which each of the detection devices is installed.

According to an aspect of the embodiments, a measurement method that causes a computer to execute a process includes collecting, from each of detection devices installed in a conveyance direction of a measurement object having a reference marker, each of detection results of the reference marker detected by the respective detection devices, and calculating based on the collected detection results, an inter-device distance that indicates an interval at which each of the detection devices is installed.

According to an aspect of the embodiments, a measurement program that causes a computer to execute a process includes collecting, from each of detection devices installed in a conveyance direction of a measurement object having a reference marker, each of detection results of the reference marker detected by the respective detection devices, and calculating based on the collected detection results, an inter-device distance that indicates an interval at which each of the detection devices is installed.

### BRIEF DESCRIPTION OF THE DRAWINGS

FIG. 1 is a diagram illustrating a configuration example and a process example related to a coating amount measurement system according to an embodiment;
FIG. 2 is a diagram illustrating a specific example of a detection device included in the coating amount measurement system according to the embodiment;
FIG. 3 is a diagram illustrating a specific example of a coating line performed in the coating amount measurement system according to the embodiment;
FIG. 4 is a diagram illustrating a specific example of a detection result obtained by the detection device included in the coating amount measurement system according to the embodiment;
FIG. 5 is a diagram for explaining an inter-device distance calculation process performed in the coating amount measurement system according to a reference technology;
FIG. 6 is a block diagram illustrating a configuration example of each of the devices included in the coating amount measurement system according to the embodiment;
FIG. 7 is a diagram illustrating one example of a detection threshold storage unit included in a measurement apparatus according to the embodiment;
FIG. 8 is a diagram illustrating one example of a detection result storage unit included in the measurement apparatus according to the embodiment;
FIG. 9 is a diagram illustrating one example of a calculation result storage unit included in the measurement apparatus according to the embodiment;
FIG. 10 is a diagram illustrating a specific example of a reference marker according to the embodiment;
FIG. 11 is a diagram illustrating a specific example of a reference marker detection process performed by the detection device according to the embodiment;
FIG. 12 is a diagram illustrating a specific example of an inter-device distance calculation process performed by the measurement apparatus according to the embodiment;
FIG. 13 is a flowchart illustrating one example of the overall flow of a process performed in the coating amount measurement system according to the embodiment;
FIG. 14 is a flowchart illustrating one example of the flow of a reference marker management process performed in the coating amount measurement system according to the embodiment;
FIG. 15 is a flowchart illustrating one example of the flow of a detection result management process performed in the coating amount measurement system according to the embodiment;
FIG. 16 is a flowchart illustrating one example of the flow of a calculation result management process performed in the coating amount measurement system according to the embodiment; and
FIG. 17 is a diagram illustrating an example of a hardware configuration according to the embodiment.

### DETAILED DESCRIPTION OF THE PREFERRED EMBODIMENTS

Preferred embodiments of a measurement apparatus, a measurement method, and a measurement program according to one embodiment of the present invention will be explained in detail below with reference to the accompanying drawings. Furthermore, the present invention is not limited to the embodiments described below.

In the following, a configuration and a process related to a coating amount measurement system 100 according to the embodiment, a configuration and a process related to each device included in the coating amount measurement system 100, the flow of each process performed in the coating amount measurement system 100, and effects of the embodiment will be described.

### 1. Configuration and process related to coating amount measurement system 100

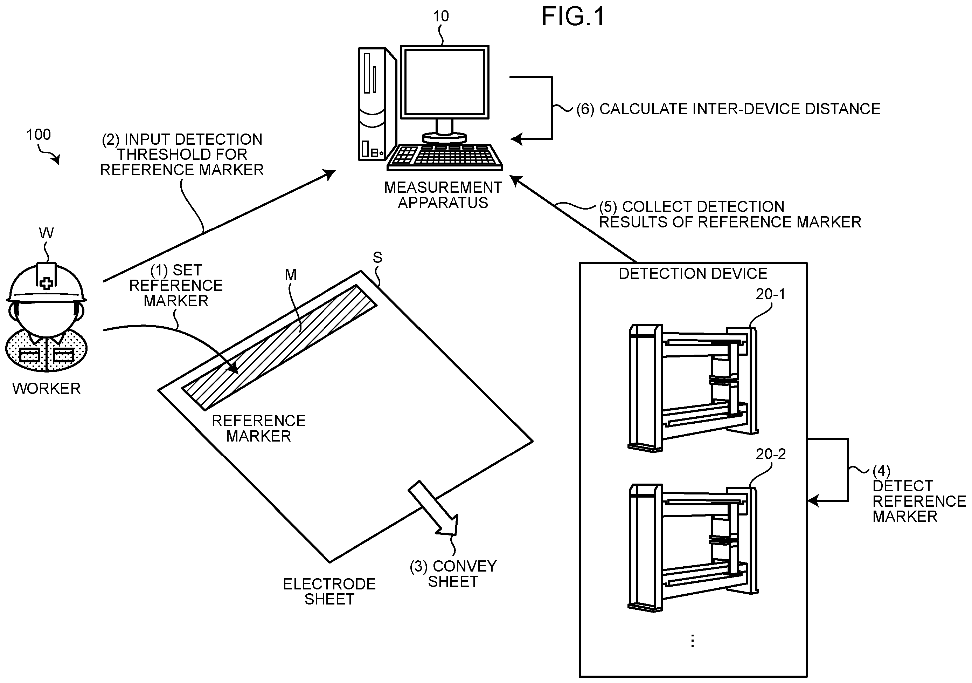

A configuration and a process related to the coating amount measurement system 100 according to the embodiment will be described with reference to FIG. 1 to FIG. 4. In the following, an example of the overall configuration of the coating amount measurement system 100, the basic principle of the coating amount measurement system 100, an example of the process performed in the coating amount measurement system 100, and the effect of the coating amount measurement system 100 will be described. Moreover, in the embodiment, a description will be given by using a measurement apparatus 10 that measures a thickness and a weight of an electrode sheet S online will be used as one example, but the example is not intended to limit a measurement target and fields of application.

### 1-1. Example of overall configuration of coating amount measurement system 100

In the following, an example of the overall configuration of the coating amount measurement system 100 will be described with reference to FIG. 1. The coating amount measurement system 100 includes the measurement apparatus 10 and a detection device 20. FIG. 1 is a diagram illustrating a configuration example and a process example related to the coating amount measurement system 100 according to the embodiment. Here, the measurement apparatus 10 and the detection device 20 are communicably connected one another via a predetermined communication network (not illustrated) in a wired or wireless manner. Moreover, various kinds of communication networks, such as the Internet or a dedicated line, may be used for the predetermined communication network. Furthermore, the coating amount measurement system 100 may also include a coating line device (not illustrated), such as a coating device CM (not illustrated), a drying device DM (not illustrated), and a roller, that will be described later. Furthermore, the measurement apparatus 10, the coating device (not illustrated), the drying device (not illustrated), and the coating line device (not illustrated) are communicably connected one another by using an analog signal, a pulse signal, Ethernet (registered trademark), or the like.

### 1-1-1. Measurement device 10

The measurement apparatus 10 is a device that is used by a worker W who manages a coating line of the electrode sheet S, and that measures a coating amount of the electrode sheet S that is a measurement object. For example, the measurement apparatus 10 is installed in an operator room, or the like that manages the coating line of the electrode sheet S. Moreover, two or more of the measurement apparatuses 10 may also be included in the coating amount measurement system 100 illustrated in FIG. 1. Furthermore, in the example illustrated in FIG. 1, a case in which the measurement apparatus 10 is implemented by a desktop personal computer (PC) is illustrated, but the measurement apparatus 10 may also be implemented by a notebook personal computer (PC), a smartphone, a server device, a cloud system, or the like.

### 1-1-2. Detection device 20

The detection device 20 (20-1, 20-2, and ... ) is a device that is arranged along a conveyance direction of the electrode sheet S, and that detects a thickness or a weight of the electrode sheet S. For example, the detection device 20 is a device that is managed by the worker W, and that is installed at the actual site of the coating line of the electrode sheet S. In the example illustrated in FIG. 1, a detection device 20-1, a detection device 20-2, ... , and the like are installed in a portion from an upstream side (on the side closer to a conveyance starting point) of the electrode sheet S to the downstream side (on the side away from conveyance starting point). Moreover, at least two detection devices 20 are included in the coating amount measurement system 100 illustrated in FIG. 1, but a single piece of the detection device 20 may be included, or three or more of the detection devices 20 may be included.

### 1-2. Basic principle of coating amount measurement system 100

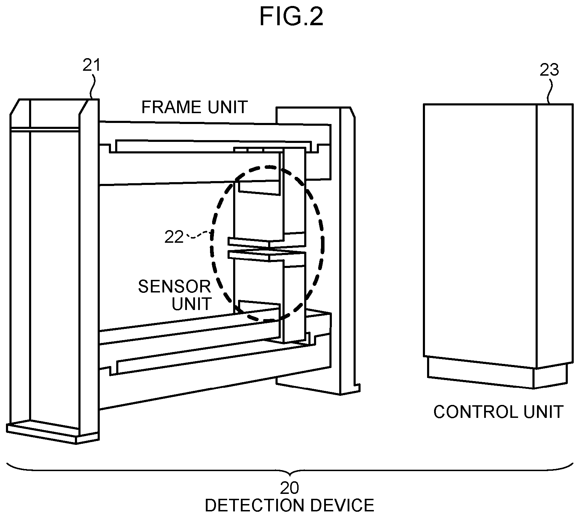

In the following, the basic principle of the coating amount measurement system 100 will be described with reference to FIG. 2 to FIG. 4. In the following, a specific example of the detection device 20 included in the coating amount measurement system 100, a specific example of the coating line performed in the coating amount measurement system 100, and a specific example of a detection result obtained by the detection device 20 included in the coating amount measurement system 100 will be described.

### 1-2-1. Specific example of detection device 20

In the following, the specific example of the detection device 20 included in the coating amount measurement system 100 will be described with reference to FIG. 2. FIG. 2 is a diagram illustrating the specific example of the detection device 20 included in the coating amount measurement system 100 according to the embodiment. As indicated by the example illustrated in FIG. 2, the detection device 20 includes a frame unit 21, a sensor unit 22, and a control unit 23.

### 1-2-1-1. Frame unit 21

The frame unit 21 is a housing portion of the detection device 20, and is arranged perpendicular to a conveyance direction of the electrode sheet S. In the frame unit 21, the sensor unit 22 (an upper part sensor unit 22U and a lower part sensor unit 22D) is installed.

### 1-2-1-2. Sensor unit 22

The sensor unit 22 is constituted by a light source that irradiates measurement light, such as radiation (for example: X-rays or β-rays) or infrared light, and a sensor head, and scans back and forth the electrode sheet S that is being conveyed. At this time, the sensor unit 22 detects a transmittance intensity of the measurement light that has been irradiated from the light source and that irradiates the electrode sheet S while moving along the frame unit 21 back and forth in a direction perpendicular to the conveyance direction of the electrode sheet S.

### 1-2-1-3. Control unit 23

The control unit 23 is communicably connected to the sensor unit 22 in a wired or wireless manner. The control unit 23 calculates a thickness (mm) or a mass (g) of the electrode sheet S from the transmittance intensity of the measurement light irradiating the electrode sheet S detected by the sensor unit 22. Furthermore, the control unit 23 may cause the measurement apparatus 10 to calculate the thickness (mm) or the mass (g) of the electrode sheet S by transmitting the transmittance intensity of the measurement light irradiating the electrode sheet S detected by the sensor unit 22 to the measurement apparatus 10.

### 1-2-2. Specific example of coating line

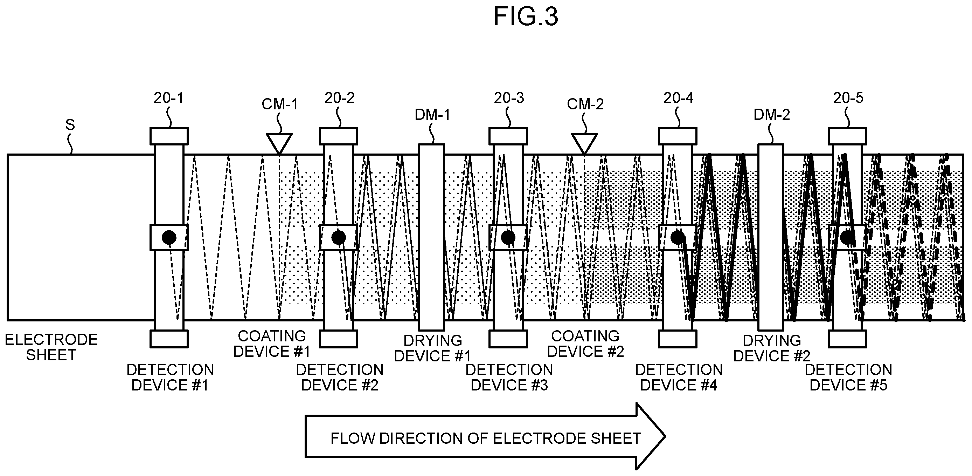

In the following, a specific example of the coating line performed in the coating amount measurement system 100 will be described with reference to FIG. 3. FIG. 3 is a diagram illustrating the specific example of the coating line performed in the coating amount measurement system 100 according to the embodiment. As indicated by the example illustrated in FIG. 3, the coating line provided in the coating amount measurement system 100 includes the detection device 20 (20-1, 20-2, 20-3, 20-4, and 20-5), the coating device CM (CM-1 and CM-2), and the drying device DM (DM-1 and DM-2).

In the example illustrated in FIG. 3, at a first step, the electrode sheet S is conveyed by a conveyance device (not illustrated), such as a roller, or the like at a constant speed. At a second step, a "detection device #1" that is the detection device 20-1 detects a thickness or a mass of the electrode sheet S before a first coating process (see the thin broken lines). At a third step, a "coating device #1" that is the coating device CM-1 performs the first coating process on the electrode sheet S (see the thin shadings). At a fourth step, a "detection device #2" that is the detection device 20-2 detects a thickness or a mass of the electrode sheet S after the first coating process and before a drying process (see the thin solid lines). At a fifth step, a "drying device #1" that is the drying device DM-1 dries the electrode sheet S that has been subjected to the first coating process. At a sixth step, a "detection device #3" that is the detection device 20-3 detects a thickness or a mass of the electrode sheet S after the first coating process and after the drying process, and also, before a second coating process (see the dashed lines). At a seventh step, a "coating device #2" that is the coating device CM-2 performs the second coating process on the electrode sheet S (see the dark shadings). At an eighth step, a "detection device #4" that is the detection device 20-4 detects a thickness or a mass of the electrode sheet S after the second coating process and before the drying process (see the thick solid lines). At a ninth step, a "drying device #2" that is the drying device DM-2 dries the electrode sheet S that has been subjected to the second coating process. At a tenth step, a "detection device #5" that is the detection device 20-5 detects a thickness or a mass of the electrode sheet S after the second coating process and also after the drying process (see the thick broken lines).

As indicated by the example illustrated in FIG. 3, in a case where two or more of the detection devices 20 are installed, in order to match the loci detected by the sensor units 22 included in the respective detection devices 20, there is a need to perform measurement of a coating amount by synchronizing each of the detection devices 20 by using both of a conveyance speed of the electrode sheet S and an inter-device distance between the detection devices 20 (a distance in a conveyance direction in which the electrode sheet S is conveyed between a position of the sensor unit 22 included in the detection device 20 located on the upstream side and a position of the sensor unit 22 included in the detection device 20 located on the downstream side. More specifically, the measurement of the coating amount needs to be performed by using the same locus by causing the timing at which the sensor unit 22 included in the detection device 20 located on the upstream side operates is to be matched with the timing at which the sensor unit 22 included in the detection device 20 located on the downstream side operates by using a conveyance distance that is obtained from the conveyance speed of the electrode sheet S and using a distance between each of the detection devices 20.

Here, regarding the conveyance speed of the electrode sheet S, it is possible to obtain a value conforming to the actual coating line from each of the devices provided in the coating line by using an analog signal, a pulse signal, external communication, or the like. At this time, the inter-device distance, that is, a position at which each of the detection devices 20 is installed, is determined by referring to a Computer-Aided Design (CAD) drawing of the coating line, but an installation error occurs, and the inter-device distance does not match the inter-device distance between the detection devices 20 provided in the actual coating line. **In** other words, an error occurs in synchronization of each of the detection devices 20 based on the error occurring in the inter-device distance, so that it is not possible to cause the loci that are detected by the sensor units 22 included in the respective detection devices 20 to be matched. Accordingly, there is a need to obtain the inter-device distance between each of the detection devices 20 with high accuracy in accordance with the site of the actual coating line.

### 1-2-3. Specific example of detection result

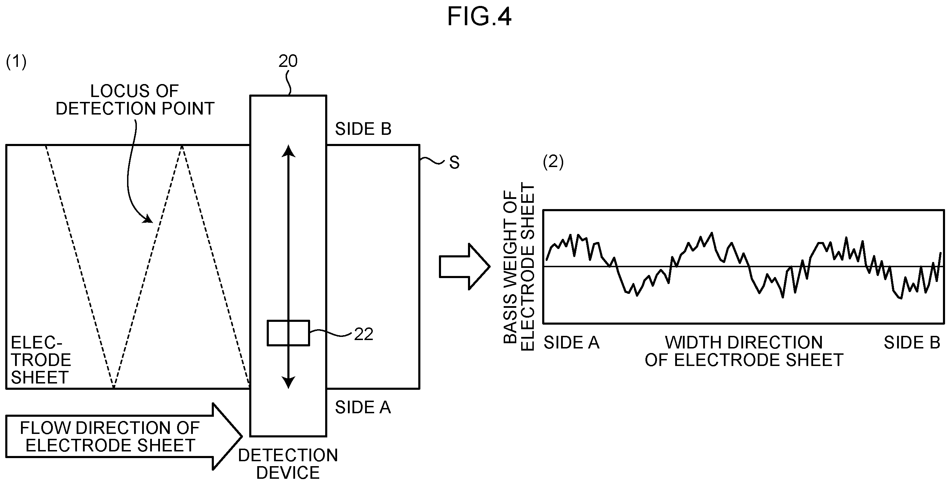

**In** the following, a specific example of a detection result obtained by the detection device 20 included in the coating amount measurement system 100 will be described with reference to FIG. 4. FIG. 4 is a diagram illustrating the specific example of the detection result obtained by the detection device 20 included in the coating amount measurement system 100 according to the embodiment.

As indicated by an example of (1) illustrated in FIG. 4, the sensor unit 22 included in the detection device 20 detects a transmittance intensity of the measurement light that has been irradiated from the light source and that irradiates the electrode sheet S while moving along the frame unit 21 back and forth between a side A and a side B in a direction perpendicular to the conveyance direction of the electrode sheet S (see a "locus of a detection point" indicated by (1) in FIG. 4).

As indicated by an example of (2) illustrated in FIG. 4, the detection device 20 outputs a detection result that displays a "basis weight of the electrode sheet" indicating a weight (g/m²) per unit area of the electrode sheet S on the vertical axis, and that displays a "width direction of the electrode sheet" indicating a position between the side A and the side B on the horizontal axis. At this time, the detection device 20 may also output a detection result that displays a "thickness of the electrode sheet" indicating a thickness (mm) of the electrode sheet S on the vertical axis.

### 1-3. Example of process performed in coating amount measurement system 100

An example of the process performed in the coating amount measurement system 100 will be described with reference again to FIG. 1. In the following, a reference marker setting process, a detection threshold input process, a sheet conveyance process, a reference marker detection process, a detection result collection process, and an inter-device distance calculation process will be described. Moreover, the processes indicated by (1) to (6) described below may also be performed in different order. In addition, some of the processes indicated by (1) to (6) described below may also be omitted.

### 1-3-1. Reference marker setting process

At a first step, the worker W sets a reference marker M that is the measurement object to the electrode sheet S (see (1) in FIG. 1). For example, the worker W attaches a marking seal that is formed in a rectangular shape and that has a thickness above a certain level to the electrode sheet S at the time of setting of the detection device 20 to the coating line or at the time of a periodic check. Here, the reference marker M may be formed in any shape, such as a round shape, an elliptical shape, or a triangular shape, as long as the detection device 20 is able to detect the marker, and the reference marker M may also be made of a material having quality of material or using a coating material that is different from the quality of material or the coating material of the electrode sheet S. The configuration of the reference marker M is not particularly limited. Furthermore, the subject that sets the reference marker M is not limited to the worker W, and the setting may also be automatically performed by a device (not illustrated). Furthermore, the measurement object is not limited to a metal foil constituting the electrode sheet S, or the like, but may also be an object in the form of a sheet made of paper, a plastic film, or the like.

### 1-3-2. Detection threshold input process

At a second step, the worker W inputs a detection threshold for the reference marker M to the measurement apparatus 10 (see (2) in FIG. 1). For example, the worker W sets the detection threshold capable for the detection device 20 detecting a thickness of the reference marker M, and inputs the detection threshold to the measurement apparatus 10. Furthermore, the measurement apparatus 10 transmits the input detection threshold to the detection device 20, and sets the detection threshold as a detection condition for the detection device 20. Here, the measurement apparatus 10 may also set the detection threshold, which has been internally defined, as the setting condition for the detection device 20 by eliminating the need for inputting the detection threshold for the reference marker M performed by the worker W. Furthermore, the measurement apparatus 10 may automatically calculate the detection threshold on the basis of a level of the measurement values in accordance with presence or absence of the reference marker M, and may set the calculated detection threshold as the setting condition for the detection device 20.

### 1-3-3. Sheet conveyance process

At a third step, the worker W conveys the electrode sheet S that is the measurement object at a constant speed (see (3) FIG. 1). For example, the worker W conveys the electrode sheet S on which the reference marker M has been attached at a conveyance speed V (m/s) by operating a roller provided in the coating line (not illustrated). At this time, it is preferable that the detection device 20 fixes the sensor unit 22 in order to avoid an operation of scanning back and forth.

### 1-3-4. Reference marker detection process

At a fourth step, the detection device 20 detects the reference marker M attached on the conveyed electrode sheet S (see (4) in FIG. 1). For example, in a case where the detection threshold that has been set by the measurement apparatus 10 exceeds, the detection device 20 detects the reference marker M. At this time, the detection device 20 outputs, as a detection result, a detection distance that indicates the total distance of the conveyed electrode sheet S and that is indicated at the time point at which the reference marker M is detected. For example, the detection device 20-1 outputs, as the detection distance, X₁ (m) that is a distance from the tail end of the electrode sheet S disposed on the conveyance starting side. Furthermore, the detection device 20-2 outputs, as the detection distance, X₂ (m) that is a distance from the tail end of the electrode sheet S disposed on the conveyance starting side. Here, the detection distance may be a value that is obtained by calculating, for example, the product of the conveyance speed V (m/s) and a minute period of time (for example, few milliseconds) at an interval of the minute period of time, and accumulating these products.

Furthermore, the detection device 20 may also output, as the detection result, a detection clock time that indicates a clock time at which the reference marker M is detected. For example, the detection device 20-1 outputs, as the detection clock time, T₁ that is a clock time at which the reference marker M is detected. Furthermore, the detection device 20-2 outputs, as the detection clock time, T₂ that is a clock time at which the reference marker M is detected.

Furthermore, the detection device 20 may also immediately output, as the detection result, information indicating that the reference marker M has been detected. For example, in a case where the detection device 20-1 detects the reference marker M, the detection device 20-1 may also immediately output the information that indicates this situation. Furthermore, in a case where the detection device 20-2 detects the reference marker M, the detection device 20-2 may also immediately output the information that indicates this situation.

### 1-3-5. Detection result collection process

At a fifth step, the measurement apparatus 10 collects the detection result from each of the detection devices 20 (see (5) in FIG. 1). For example, the measurement apparatus 10 collects, from the detection device 20-1, as the detection result, X₁ (m) that is the detection distance of the reference marker M. Furthermore, the measurement apparatus 10 collects, from the detection device 20-2, as the detection result, X₂ (m) that is the detection distance of the reference marker M.

Furthermore, the measurement apparatus 10 may also collect, from the detection device 20-1, as the detection result, T₁ that is a detection clock time of the reference marker M. Furthermore, the measurement apparatus 10 may also collect, from the detection device 20-2, as the detection result, T₂ that is a detection clock time of the reference marker M. Moreover, the measurement apparatus 10 may also directly collect detection clock time T₁ and the detection clock time T₂ by receiving the detection clock times T₁ and the T₂ from the detection device 20-1 and the detection device 20-2, respectively. Furthermore, the measurement apparatus 10 may also indirectly collect the detection clock time T₁ and the detection clock time T₂ by receiving the information indicating that the reference marker M has been detected from the detection device 20-1 and the detection device 20-2, respectively, and recording each of the clock times at which the information is received.

### 1-3-6. Inter-device distance calculation process

At a sixth step, the measurement apparatus 10 calculates an inter-device distance from the detection results (see (6) in FIG. 1). For example, the measurement apparatus 10 calculates X₂ - X₁ (m) that is a difference between the detection distances of the reference marker M as the inter-device distance between the detection device 20-1 and the detection device 20-2. At this time, the measurement apparatus 10 stores the calculated X₂ - X₁ (m) as the inter-device distance obtained after adjustment between the detection device 20-1 and the detection device 20-2.

Furthermore, the measurement apparatus 10 may also calculate (T₂ - T₁) × V (m) that is the product of the difference between the detection clock times of the reference marker M and the conveyance speed V of the electrode sheet S as the inter-device distance between the detection device 20-1 and the detection device 20-2. At this time, the measurement apparatus 10 may also store the calculated (T₂ - T₁) × V (m) as the inter-device distance between the detection device 20-1 and the detection device 20-2 obtained after adjustment.

### 1-4. Effect of coating amount measurement system 100

In the following, an outline of and a problem in a coating amount measurement system 100P according to a reference technology will be described, and then, the effect of the coating amount measurement system 100 will be described.

### 1-4-1. Outline of coating amount measurement system 100P

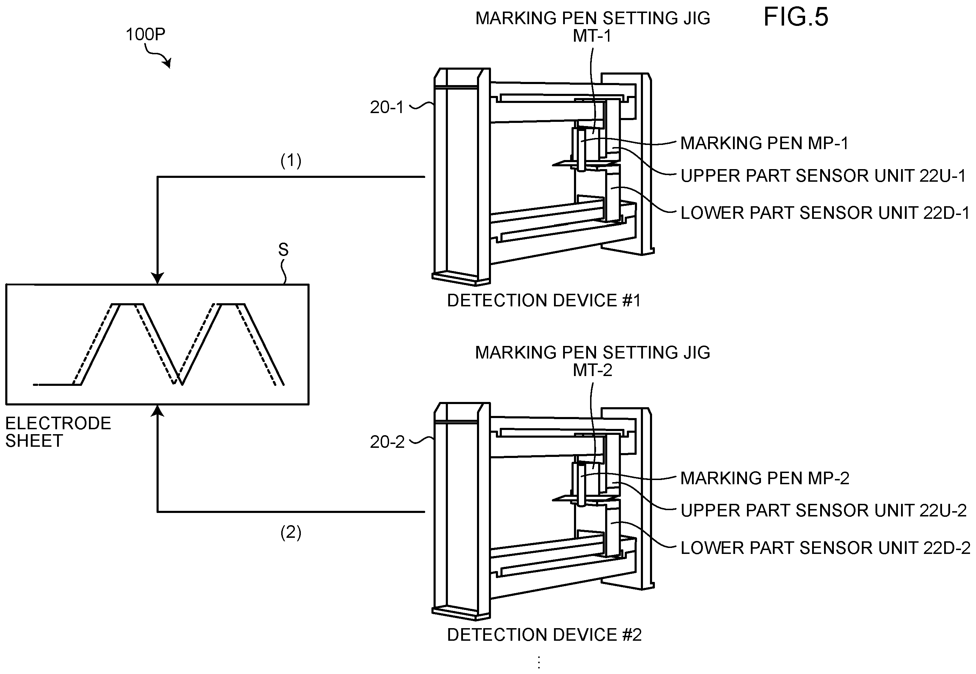

Here, the outline of the coating amount measurement system 100P according to the reference technology will be described with reference to FIG. 5. FIG. 5 is a diagram illustrating the inter-device distance calculation process performed in the coating amount measurement system 100P according to the reference technology.

In the following, an assumption of the coating amount measurement system 100P will be described. In a production process for applying some sort of material to some sort of sheet, as in a case of the production line of the electrode sheet S, it is desired to obtain a coating amount of thereof with high accuracy. At this time, in order to accurately obtain the coating amount after the coating process, there is a need to match loci of the positions that are detected by the respective detection devices 20 installed at different installation positions (a different distance between each of the detection devices 20), in particular, the positions that are detected by the respective detection devices 20 before and after the coating processes.

In the coating amount measurement system 100P, there is a need for the worker W to perform the following operation for adjusting the inter-device distance that is internally stored in the system in order to prevent a shift in a locus of the detection points obtained by the respective detection devices 20.

At a first step, the worker W uses a marking pen setting jig MT (MT-1, MT-2, and ... ) illustrated in FIG. 5, and fixes a marking pen MP (MP-1, MP-2, and ... ), such as an oil pen, to the upper part sensor unit 22U (22U-1, 22U-2, and ... ) or the lower part sensor unit 22D (22D-1, 22D-2, and ... ) of the detection device 20 (20-1, 20-2, and ... ). At this time, the worker W sets a height, as a height for fixing the marking pen MP, at which the marking pen MP is not brought into contact with the electrode sheet S, in order to maintain the state of ink of the marking pen MP. Furthermore, the worker W sets the marking pens MP each having different colors to the respective detection devices 20 in order to distinguish the locus of each of the detection devices 20. For example, the worker W sets a marking pen MP-1 that is a red oil pen to a marking pen setting jig MT-1 for the "detection device #1" that is the detection device 20-1 disposed on the upstream side, whereas the worker W sets a marking pen MP-2 that is a blue oil pen to a marking pen setting jig MT-2 for the "detection device #2" that is the detection device 20-2 disposed on the downstream side.

At a second step, the worker W starts a conveyance of the electrode sheet S in the coating line. At this time, the worker W adjusts the height for fixing the marking pen MP to a state in which a line is drawn on the electrode sheet S and causes the system to start a measurement operation to obtain a drawing of each of the loci that have been actually detected by the sensor units 22 included in the respective detection devices 20 on the electrode sheet S as indicated by an image illustrated in FIG. 5. In the example illustrated in FIG. 5, the locus of the detection point drawn by the "detection device #1" that is the detection device 20-1 disposed on the upstream side is indicated by the broken lines (see (1) in FIG. 5), and the locus of the detection point drawn by the "detection device #2" that is the detection device 20-2 disposed on the downstream side is indicated by the solid line (see (2) in FIG. 5).

At a third step, the worker W visually checks the locus drawn by each of the detection devices 20, and adjusts the inter-device distance that is internally stored in the system in order to avoid a shift in the loci. At this time, in general, there is a difference between the inter-device distance that has been input as the initial value and that is related to a CAD drawing of the coating line and an actual conveyance path of the coating line, so that a shift occurs in the loci caused by the marking pens MP drawn on the electrode sheet S by an amount corresponding to the difference. The worker W examines the shift amount by using a ruler or the like, and adjusts the inter-device distance on the basis of the examined shift amount. The worker W repeats the adjustment described above until the shift amount of the loci caused by the marking pens MP is within a specified range.

### 1-4-2. Problem in coating amount measurement system 100P

A problem in the coating amount measurement system 100P according to the reference technology will be described. Firstly, in the coating amount measurement system 100P, the worker W needs to manually operate the marking pen setting jig MT, and visually check the locus obtained by the marking pen MP. As a result of this, in the coating amount measurement system 100P, a variation occurs in the adjustment accuracy of the inter-device distance between the detection devices 20. Furthermore, in the coating amount measurement system 100P, there is a need to assign a plurality of staff members to each of the devices, such as each of the detection devices 20. Moreover, in the coating amount measurement system 100P, in a case where the detection device 20 uses radiations, such as X-rays or β-rays, the number of the workers W to be arranged in the vicinity of the detection device 20 from a viewpoint of radiation management. Secondly, in the coating amount measurement system 100P, the ink of the marking pen MP may be adhered to each of the devices installed in the coating line, and the devices are consequently damaged.

### 1-4-3. Outline of coating amount measurement system 100

An outline of the coating amount measurement system 100 according to the embodiment will be described. In the coating amount measurement system 100, the following process is performed. At a first step, the worker W sets a marking seal that is formed in a rectangular shape and that has a thickness above a certain level to the electrode sheet S as the reference marker M at the time of installation of the detection device 20 in the coating line, at the time of a periodic check, or the like. At a second step, the worker W inputs a detection threshold that is able to be detected by the detection device 20 as a thickness of the reference marker M to the measurement apparatus 10, and then sets the input detection threshold as the detection threshold for the detection device 20. At a third step, the worker W conveys, at a constant speed, the electrode sheet S on which the marking seal has been attached. At a fourth step, in a case where the set detection threshold exceeds, the detection device 20 detects the marking seal, and outputs the detection distance or the detection clock time described above as a detection result. At a fifth step, the measurement apparatus 10 collects the detection distances or the detection clock times described above on the basis of the output result obtained from the respective detection devices 20. At a sixth step, the measurement apparatus 10 calculates the inter-device distance between each of the detection devices 20 by using the detection distance or the detection clock time described above, and stores the calculated inter-device distance as the inter-device distance obtained after adjustment.

### 1-4-4. Effect of coating amount measurement system 100

The effect of the coating amount measurement system 100 according to the embodiment will be described. As a first effect, in the coating amount measurement system 100, it is possible to automatically adjust the inter-device distance between the detection devices 20 by hardware and software. As a result of this, in the coating amount measurement system 100, it is possible to eliminate the determination performed by the worker W, and minimize a variation in adjustment accuracy of the inter-device distance between the detection devices 20. As a second effect, in the coating amount measurement system 100, a marking pen MP is not used, and, in addition, a process of visually checking a locus performed by the worker W becomes unnecessary. As a result of this, in the coating amount measurement system 100, it is possible to minimize the number of staff members needed for the adjustment work of the inter-device distance between the detection devices 20, and minimize the work performed in the vicinity of the detection device 20 by eliminating the operation of the marking pen setting jig MT. As a third effect, in the coating amount measurement system 100, by introducing a structure in which the marking pen MP is not used, it is possible to solve the problem that ink is adhered to each of the devices installed in the coating line.

As described above, in the coating amount measurement system 100, it is possible to simply obtain an installation position of each of the detection devices included in the production line.

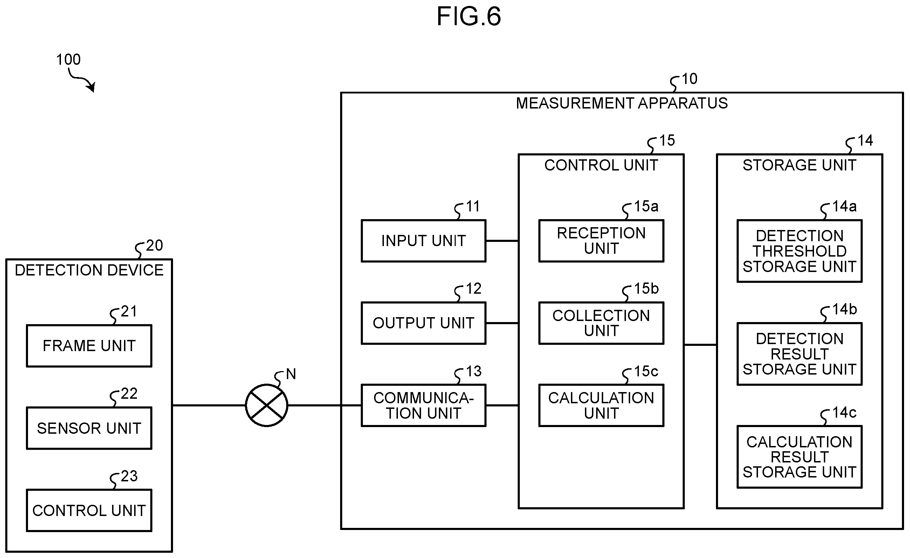

2. Configuration and process related to each device included in coating amount measurement system 100 A configuration and a process related to each of the devices included in the coating amount measurement system 100 illustrated in FIG. 1 will be described with reference to FIG. 6. FIG. 6 is a block diagram illustrating a configuration example of each of the devices included in the coating amount measurement system 100 according to the embodiment. In the following, an example of the overall configuration of the coating amount measurement system 100 according to the embodiment, a configuration example and a process example related to the measurement apparatus 10, and a configuration example and a process example related to the detection device 20 will be described.

### 2-1. Example of overall configuration of coating amount measurement system 100

An example of the overall configuration of the coating amount measurement system 100 illustrated in FIG. 1 will be described with reference to FIG. 6. As illustrated in FIG. 6, the coating amount measurement system 100 included the measurement apparatus 10 and the detection device 20. Furthermore, the measurement apparatus 10 and the detection device 20 are communicably connected one another by the communication network N that is implemented by the Internet, a dedicated line, or the like. Furthermore, the measurement apparatus 10, the coating device CM (not illustrated), the drying device DM (not illustrated), and the coating line device (not illustrated) are communicably connected one another by using an analog signal, a pulse signal, Ethernet (registered trademark), or the like.

### 2-2. Configuration example and process example related to measurement apparatus 10

A configuration example and a process example related to the measurement apparatus 10 will be described with reference to FIG. 6. The measurement apparatus 10 includes an input unit 11, an output unit 12, a communication unit 13, a storage unit 14, and a control unit 15.

### 2-2-1. Input unit 11

The input unit 11 manages an input of various kinds of information with respect to the measurement apparatus 10. For example, the input unit 11 is implemented by a mouse, a keyboard, and the like, and receives an input of various kinds of information to the measurement apparatus 10.

### 2-2-2. Output unit 12

The output unit 12 manages an output of various kinds of information received from the measurement apparatus 10. For example, the output unit 12 is implemented by a display, or the like, and displays various kinds of information stored in the measurement apparatus 10.

### 2-2-3. Communication unit 13

The communication unit 13 manages data communication performed with the other devices. For example, the communication unit 13 performs data communication with each of the communication devices via a router, or the like. Furthermore, the communication unit 13 is able to perform data communication with a terminal that is used by an operator (not illustrated).

### 2-2-4. Storage unit 14

The storage unit 14 stores therein various kinds of information referred to by the control unit 15 when the control unit 15 operates, and various kinds of information that have been acquired when the control unit 15 operates. The storage unit 14 includes a detection threshold storage unit 14a, a detection result storage unit 14b, and a calculation result storage unit 14c. Here, the storage unit 14 is implemented by, for example, a semiconductor memory device, such as a random access memory (RAM) or a flash memory, or a storage device, such as a hard disk or an optical disk. Moreover, in the example illustrated in FIG. 6, the storage unit 14 is installed in the measurement apparatus 10; however, the storage unit 14 may be installed outside the measurement apparatus 10, or a plurality of storage units may be installed.

### 2-2-4-1. Detection threshold storage unit 14a

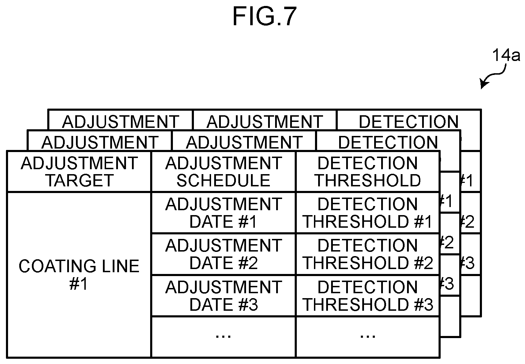

The detection threshold storage unit 14a stores therein a detection threshold. For example, the detection threshold storage unit 14a stores therein the detection threshold that has been received by a reception unit 15a that will be described later and that is included in the control unit 15. In the following, one example of data stored in the detection threshold storage unit 14a will be described with reference to FIG. 7. FIG. 7 is a diagram illustrating one example of the detection threshold storage unit 14a included in the measurement apparatus 10 according to the embodiment. In the example illustrated in FIG. 7, the detection threshold storage unit 14a includes items of an "adjustment target", an "adjustment schedule", and a "detection threshold".

The "adjustment target" indicates identification information for identifying a production process of a measurement object for the inter-device distance to be adjusted, and is, for example, an identification number or an identification symbol of the coating line of the electrode sheet S. The "adjustment schedule" indicates the schedule of the inter-device distance to be adjusted, and is represented by, for example, year, month, day at the time of installation of the detection device 20 or at the time of a periodic check of the coating line. The "detection threshold" indicates a threshold of a detection intensity of the measurement object, and is represented by, for example, a basis weight (g/m²), a thickness (mm), a voltage (V) that is a signal value.

In other words, FIG. 7 illustrates an example in which the detection threshold storage unit 14a stores therein data related to an adjustment target identified by a "coating line #1" is the data of {adjustment schedule: "adjustment date #1", detection threshold: "detection threshold #1"}, {adjustment schedule: "adjustment date #2", detection threshold: "detection threshold #2"}, {adjustment schedule: "adjustment date #3", detection threshold: "detection threshold #3"}, and the like.

Moreover, in FIG. 7, a case has been described as an example in which the detection threshold is stored for each adjustment schedule, but the detection threshold storage unit 14a may store a single piece of detection threshold that is associated with the adjustment target. In other words, regarding the adjustment target identified by the "coating line #1", the detection threshold storage unit 14a is able to store the "detection threshold #1" that is the single piece of detection threshold, and update the stored detection threshold every time a new detection threshold is received by the reception unit 15a.

### 2-2-4-2. Detection result storage unit 14b

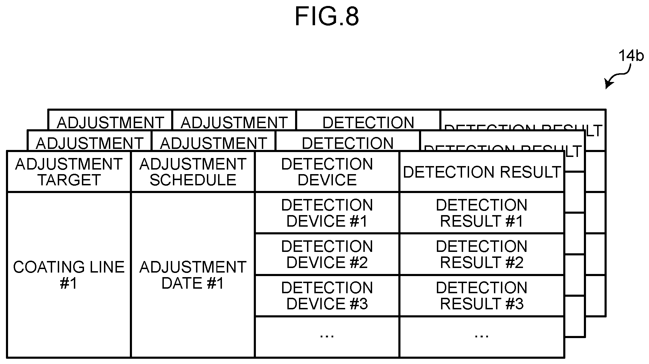

The detection result storage unit 14b stores therein a detection result. For example, the detection result storage unit 14b stores therein the detection results collected by a collection unit 15b that will be described later and that is included in the control unit 15. In the following, one example of the data stored in the detection result storage unit 14b will be described with reference to FIG. 8. FIG. 8 is a diagram illustrating one example of the detection result storage unit 14b included in the measurement apparatus 10 according to the embodiment. In the example illustrated in FIG. 8, the detection result storage unit 14b includes items of an "adjustment target", an "adjustment schedule", a "detection device", and a "detection result".

The "adjustment target" indicates identification information for identifying a production process of a measurement object whose inter-device distance is to be adjusted, and is, for example, an identification number or an identification symbol of the coating line of the electrode sheet S. The "adjustment schedule" indicates the schedule of the inter-device distance to be adjusted, and is represented by, for example, year, month, day at the time of installation of the detection device 20 or at the time of a periodic check of the coating line. The "detection device" indicates identification information on the detection device 20 whose inter-device distance is to be adjusted, and is an identification number or an identification symbol of the detection device 20 that is installed from, for example, the upstream side to the downstream side of the coating line. The "detection result" indicates information on a position or time related to the reference marker M that has been detected by the detection device 20, and, for example, a detection distance indicating a total distance of the conveyed electrode sheet S is expressed in meters (m), or a detection clock time indicating a clock time at which the reference marker M is detected is expressed in hours, minutes, and seconds.

In other words, FIG. 8 illustrates an example in which the detection result storage unit 14b stores therein data related to an adjustment target identified by the "coating line #1" and an adjustment schedule identified by the "adjustment date #1" is the data of {detection device: "detection device #1", detection result : "detection result #1"}, {detection device: "detection device #2", detection result : "detection result #2"}, {detection device: "detection device #3", detection result : "detection result #3"}, {detection device: "detection device #4", detection result : "detection result #4"}, and the like.

### 2-2-4-3. Calculation result storage unit 14c

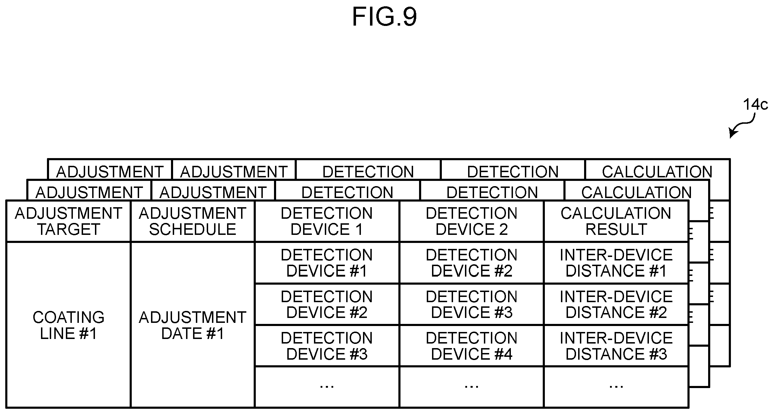

The calculation result storage unit 14c stores therein a calculation result. For example, the calculation result storage unit 14c stores therein a calculation result that has been output by a calculation unit 15c that will be described later and that is included in the control unit 15. In the following, one example of the data stored in the calculation result storage unit 14c will be described with reference to FIG. 9. FIG. 9 is a diagram illustrating one example of the calculation result storage unit 14c included in the measurement apparatus 10 according to the embodiment. In the example illustrated in FIG. 9, the calculation result storage unit 14c includes items of an "adjustment target", an "adjustment schedule", a "detection device 1", a "detection device 2", and a "calculation result".

The "adjustment target" indicates identification information for identifying a production process of a measurement object whose inter-device distance is to be adjusted, and is, for example, an identification number or an identification symbol of the coating line of the electrode sheet S. The "adjustment schedule" indicates the schedule of the inter-device distance to be adjusted, and is represented by, for example, year, month, day at the time of installation of the detection device 20 or at the time of a periodic check of the coating line. The "detection device 1" indicates identification information on the detection device 20 that is disposed on the upstream side and whose inter-device distance is to be adjusted, and is an identification number or an identification symbol of the detection device 20 that is installed on a side closer to, for example, the conveyance starting point of the coating line. The "detection device 2" indicates identification information on the detection device 20 that is disposed on the downstream side and whose inter-device distance is to be adjusted, and is an identification number or an identification symbol of the detection device 20 that is installed on a side away from, for example, the conveyance starting point of the coating line. The "calculation result" indicates the inter-device distance between the detection devices 20 calculated from the detection result, and is expressed in, for example, meters (m).

**In** other words, FIG. 9 illustrates an example in which the calculation result storage unit 14c stores therein data related to the adjustment target identified by the "coating line #1" and the adjustment schedule identified by the "adjustment date #1" is the data indicating that the inter-device distance that is a calculation result between the "detection device #1" disposed on the upstream side and the "detection device #2" disposed on the downstream side is an "inter-device distance #1", the data indicating that the inter-device distance that is a calculation result between the "detection device #2" disposed on the upstream side and the "detection device #3" disposed on the downstream side is an "inter-device distance #2", the data indicating that the inter-device distance that is a calculation result between the "detection device #3" disposed on the upstream side and the "detection device #4" disposed on the downstream side is an "inter-device distance #3 ", and the like.

### 2-2-5. Control unit 15

The control unit 15 manages the overall control of the measurement apparatus 10. The control unit 15 includes the reception unit 15a, the collection unit 15b, and the calculation unit 15c. Here, the control unit 15 is implemented by, for example, an electronic circuit, such as a central processing unit (CPU) or a micro processing unit (MPU), or an integrated circuit, such as an application specific integrated circuit (ASIC) or a field programmable gate array (FPGA).

### 2-2-5-1. Reception unit 15a

The reception unit 15a receives various kinds of information. Moreover, the reception unit 15a may also store the received various kinds of information in the storage unit 14. In the following, a detection threshold reception control process and a detection threshold transmission process will be described.

### Detection threshold reception control process

The reception unit 15a performs the detection threshold reception control process. For example, the reception unit 15a receives a detection threshold for detecting the reference marker M. For example, the reference marker M is a marker that is in the form of a seal and that is attached to the measurement object. Furthermore, the reception unit 15a stores the received detection threshold in the storage unit 14.

A specific example of the detection threshold reception control process will be described. The reception unit 15a receives the data of {adjustment target: "coating line #1", adjustment schedule: "adjustment date #1", and detection threshold: "detection threshold #1"} as the detection threshold that has been input via the input unit 11 by the worker W, and stores the received data in the detection threshold storage unit 14a.

### Detection threshold transmission process

The reception unit 15a performs the detection threshold transmission process. For example, the reception unit 15a transmits the detection threshold for detecting the reference marker M to each of the detection devices 20. At this time, the reception unit 15a refers to the detection threshold stored in the storage unit 14.

A specific example of the detection threshold transmission process will be described below. The reception unit 15a refers to the data of {adjustment target: "coating line #1", adjustment schedule: "adjustment date #1", and detection threshold: "detection threshold #1"} as the detection threshold stored in the detection threshold storage unit 14a; transmits the referred detection threshold to the "detection device #1", the "detection device #2", the "detection device #3", the "detection device #4", ... and the like as each of the detection devices 20 installed in the "coating line #1" that is the adjustment target; and sets the detection threshold as a detection condition for each of the detection devices 20.

### 2-2-5-2. Collection unit 15b

The collection unit 15b collects various kinds of information. Moreover, the collection unit 15b may store the collected various kinds of information in the storage unit 14. In the following, a specific example of the detection result collection control process (the detection distance collection control process and the detection clock time collection control process), and a specific example of the reference marker M will be described.

### Detection result collection control process

The collection unit 15b performs the detection result collection control process. For example, the collection unit 15b collects each of the detection results of the reference marker M detected by the respective detection devices 20, from each of the detection devices 20 installed in the conveyance direction of the measurement object having the reference marker M. At this time, the collection unit 15b collects each of the detection results detected by the respective sensor units 22 included in the respective detection devices 20. Furthermore, the collection unit 15b collects each of the detection results detected by the respective detection devices 20 in accordance with the detection threshold.

A specific example of the detection result collection control process will be described. The collection unit 15b collects the "detection result #1" as the detection result that has been detected by a sensor unit 22-1 provided in the "detection device #1" that is the detection device 20-1, collects the "detection result #2" as the detection result that has been detected by a sensor unit 22-2 provided in the "detection device #2" that is the detection device 20-2, collects the "detection result #3" as the detection result that has been detected by a sensor unit 22-3 provided in the "detection device #3" that is the detection device 20-3, and stores each of the detection results in the detection result storage unit 14b.

### Detection distance collection control process

The collection unit 15b performs the detection distance collection control process as the detection result collection control process. For example, the collection unit 15b collects the detection distance indicating the total distance of the conveyed measurement object as the detection result. At this time, the collection unit 15b collects the detection distance indicating the total distance of a conveyance of, for example, the electrode sheet S.

A specific example of the detection distance collection control process will be described. The collection unit 15b collects the "detection distance #1" as the detection distance that has been detected by the sensor unit 22-1 provided in the "detection device #1" that is the detection device 20-1, collects the "detection distance #2" as the detection distance that has been detected by the sensor unit 22-2 provided in the "detection device #2" that is the detection device 20-2, collects the "detection distance #3" as the detection distance that has been detected by the sensor unit 22-3 provided in the "detection device #3" that is the detection device 20-3, and stores each of the collected detection distances in the detection result storage unit 14b.

### Detection clock time collection control process

The collection unit 15b performs the detection clock time collection control process as the detection result collection control process. For example, the collection unit 15b collects, as the detection results, the detection clock times each indicating the clock time at which the reference marker M is detected. At this time, the collection unit 15b collects, for example, the detection clock times each indicating the clock time at which the reference marker M that is in the form of a seal and that is attached to the electrode sheet S.

A specific example of the detection clock time collection control process will be described below. The collection unit 15b collects a "detection clock time #1" as the detection clock time at which the sensor unit 22-1 provided in the "detection device #1" that is the detection device 20-1 detects the reference marker M, collects a "detection clock time #2" as the detection clock time at which the sensor unit 22-2 provided in the "detection device #2" that is the detection device 20-2 detects the reference marker M, collects a "detection clock time #3" as the detection clock time at which the sensor unit 22-3 provided in the "detection device #3" that is the detection device 20-3 detects the reference marker M, and stores the collected detection clock times in the detection result storage unit 14b.

### 2-2-5-3. Calculation unit 15c

The calculation unit 15c outputs the calculation results. Moreover, the calculation unit 15c may store the output calculation results in the storage unit 14. **In** the following, a calculation result management process (the detection distance analysis process and the detection clock time analysis process) and a calculation result update process will be described.

### Calculation result management process

The calculation unit 15c performs the calculation result management process. Fr example, the calculation unit 15c calculates, on the basis of the collected detection results, an inter-device distance indicating an interval of the setting of each of the detection devices 20.

A specific example calculation result management process will be described. The calculation unit 15c refers to the data of {detection device: "detection device #1", detection result : "detection result #1"}, {detection device: "detection device #2", detection result : "detection result #2"}, {detection device: "detection device #3", detection result : "detection result #3"}, and {detection device: "detection device #4", detection result : "detection result #4"} as the detection results stored in the detection result storage unit 14b; calculates an inter-device distance between the "detection device #1" disposed on the upstream side and the "detection device #2" disposed on the downstream side as the "inter-device distance #1"; calculates an inter-device distance between the "detection device #2" disposed on the upstream side and the "detection device #3" disposed on the downstream side as the "inter-device distance #2"; calculates an inter-device distance between the "detection device #3" disposed on the upstream side and the "detection device #4" disposed on the downstream side as the "inter-device distance #3"; and stores the calculation results in the calculation result storage unit 14c.

### Detection distance analysis process

The collection unit 15b performs the detection distance analysis process as the calculation result management process. For example, the calculation unit 15c calculates a difference between the detection distances of the respective detection devices 20 as the inter-device distance.

A specific example of the detection distance analysis process will be described. The calculation unit 15c refers to the data of {detection device: "detection device #1", detection distance: "detection distance #1"}, {detection device: "detection device #2", detection distance: "detection distance #2"}, {detection device: "detection device #3", detection distance: "detection distance #3"}, and {detection device: "detection device #4", detection distance: "detection distance #4"} as the detection results stored in the detection result storage unit 14b; calculates a difference between the "detection distance #2" and the "detection distance #1" as the "inter-device distance #1"; calculates a difference between the "detection distance #3" and the "detection distance #2" as the "inter-device distance #2"; calculates a difference between the "detection distance #4" and the "detection distance #3" as the "inter-device distance #3"; and stores the calculation results in the calculation result storage unit 14c.

### Detection clock time analysis process

The collection unit 15b performs the detection clock time analysis process as the calculation result management process. For example, the calculation unit 15c calculates, as the inter-device distance, the product of a difference between the detection clock times detected by the respective detection devices 20 and a conveyance speed indicating a speed at which the measurement object has been conveyed.

A specific example of the detection clock time analysis process will be described. The calculation unit 15c refers to the data of {detection device: "detection device #1", detection clock time: "detection clock time #1"}, {detection device: "detection device #2", detection clock time: "detection clock time #2"}, {detection device: "detection device #3", detection clock time: "detection clock time #3"}, and {detection device: "detection device #4", detection clock time: "detection clock time #4"} as the detection results stored in the detection result storage unit 14b; further refers to a "conveyance speed #1" that is the conveyance speed of the electrode sheet S; calculates a value obtained by multiplying a difference between a "detection clock time #2" and the "detection clock time #1" by the "conveyance speed #1" as the "inter-device distance #1"; calculates a value obtained by multiplying a difference between a "detection clock time #3" and the "detection clock time #2" by the "conveyance speed #1" as the "inter-device distance #2"; calculates a value obtained by multiplying a difference between the "detection clock time #4" and the "detection clock time #3" by the "conveyance speed #1" as the "inter-device distance #3"; and stores the calculation results in the calculation result storage unit 14c.

### Calculation result update process

The calculation unit 15c performs the calculation result update process. For example, the calculation unit 15c uses the calculated inter-device distance, and updates a parameter that is used when the measurement object is measured.

A specific example of the calculation result update process will be described. The calculation unit 15c uses the calculated "inter-device distance #1", the calculated "inter-device distance #2", and the calculated "inter-device distance #3", and updates the parameter (parameter for adjusting the measurement position of each of the sensor units 22) that is used at the time of synchronization of the sensor units 22.

### 2-3. Configuration example and process example related to detection device 20

The configuration example and the process example related to the detection device 20 will be described again with reference to FIG. 6. The detection device 20 is installed in the coating line for coating the measurement object that is in the form of a sheet. For example, the detection device 20 is installed in the coating line for coating the electrode sheet S. Furthermore, the detection device 20 includes a frame unit 21, the sensor unit 22, and the control unit 23.

### 2-3-1. Frame unit 21

The frame unit 21 is a housing portion made of metal, and in which the sensor unit 22 (the upper part sensor unit 22U and the lower part sensor unit 22D) is installed.

### 2-3-2. Sensor unit 22

The sensor unit 22 irradiates the measurement object that is in the form of a sheet with measurement light, such as radiation or infrared light, and acquires a transmittance intensity of the measurement light. For example, the sensor unit 22 is implemented by upper and lower sensor heads, a light source that emits the measurement light, and the like, and acquires the transmittance intensity of the measurement light irradiating the electrode sheet S.

### 2-3-3. Control unit 23

The control unit 23 is communicably connected to the sensor unit 22 in a wired or wireless manner. Furthermore, the control unit 23 controls a process of a movement of the sensor unit 22 along the frame unit 21 back and forth, a process of irradiating measurement light, a process of acquiring a transmittance intensity, and the like. Furthermore, the control unit 23 calculates a thickness (mm) and a mass (g) of the electrode sheet S from the transmittance intensity of the measurement light irradiating the electrode sheet S detected by the sensor unit 22. Furthermore, the control unit 23 may transmit the transmittance intensity of the measurement light irradiating the electrode sheet S detected by the sensor unit 22 to the measurement apparatus 10, and may cause the measurement apparatus 10 to calculate the thickness (mm) and the mass (g) of the electrode sheet S.

### 3. Specific example of each process performed in coating amount measurement system 100

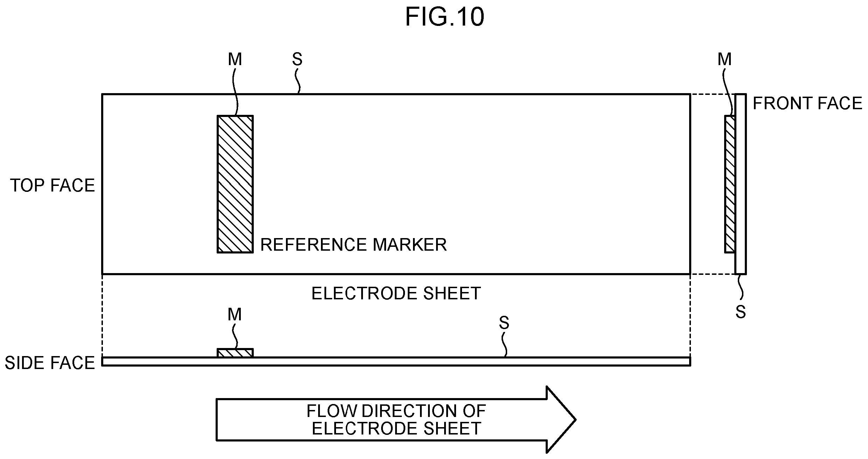

A specific example of each of the processes performed in the coating amount measurement system 100 according to the embodiment will be described with reference to FIG. 10 to FIG. 12. In the following, a specific example of the reference marker M, a specific example of the reference marker detection process performed by the detection device 20, and the specific example of an inter-device distance calculation process performed by the measurement apparatus 10 will be described.

### 3-1. Specific example of reference marker M

A specific example of the reference marker M will be described with reference to FIG. 10. FIG. 10 is a diagram illustrating the specific example of the reference marker M according to the embodiment. In the following, a basic example and a modification of the reference marker M will be described.

### 3-1-1. Basic example

A basic example of an installation technique of the reference marker M will be described. In the example illustrated in FIG. 10, the reference marker M is a marker (marking seal) that is in the form of a seal and that is attached to the measurement object. For example, the reference marker M is a marking seal that is formed in a rectangular shape with a thickness above a certain level and that is attached to the electrode sheet S. Furthermore, the reference marker M is, for example, a paper tape. At this time, the detection results may possibly be different each other as a result of the electrode sheet S winding on the coating line, so that the marking seal is preferably attached such that the longitudinal direction of the marking seal is perpendicular to a flow direction of the electrode sheet S.

### 3-1-2. Modification

A modification of the installation technique of the reference marker M will be described. The reference marker M may be a marker that is in the form of a seal having a round shape, an elliptical shape, a triangular shape, or the like as long as the detection device 20 is able to detect the marker. Furthermore, a material having a quality of material that is different from that of the measurement object may be bonded or welded to the reference marker M. Furthermore, as the reference marker M, a coating material is applied (e.g.: to set the unit of an output from a photo sensor as a threshold by the photo sensor, and optically detect a color) or engraved (e.g.: to set a negative threshold for a thickness or a basis weight, and detect the engraved mark) on the measurement object. Furthermore, in addition to a single piece of marker, the reference marker M may be a plurality of markers that are attached to the measurement object at fixed intervals.

### 3-2. Specific example of reference marker detection process performed in detection device 20

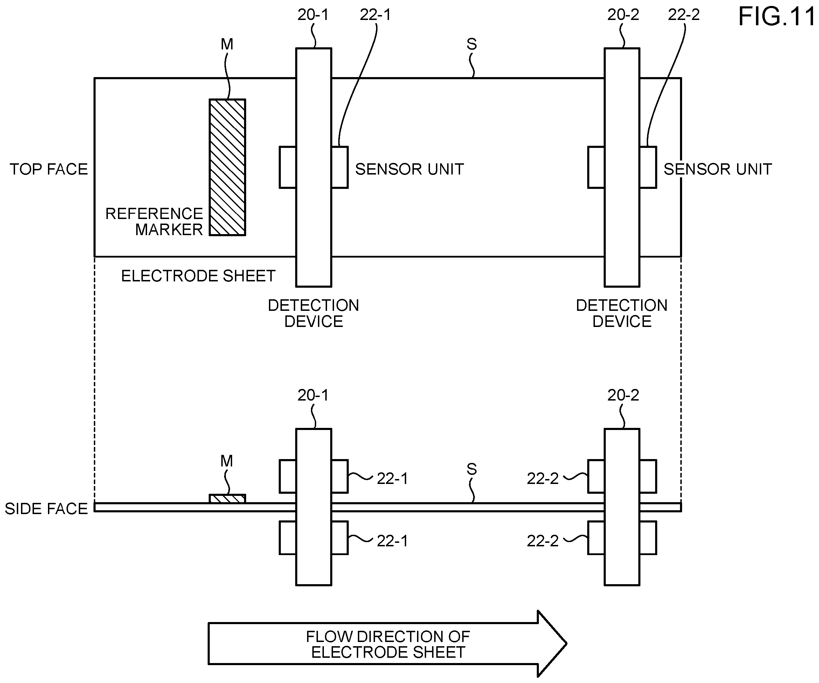

A specific example of the reference marker detection process performed in the detection device 20 will be described with reference to FIG. 11. FIG. 11 is a diagram illustrating the specific example of the reference marker detection process performed by the detection device 20 according to the embodiment. In the following, a basic example and a modification of the reference marker detection process performed by the detection device 20 will be described.

### 3-2-1. Basic example

The basic example of the reference marker detection process performed by the detection device 20 will be described. In the example illustrated in FIG. 11, the detection device 20 is installed in the coating line for coating the electrode sheet S. For example, the sensor unit 22-1 provided in the detection device 20-1 disposed on the upstream side of the coating line detects the reference marker M that is set on the electrode sheet S. Furthermore, the sensor unit 22-2 provided in the detection device 20-2 disposed on the downstream side of the coating line detects the reference marker M that is set on the electrode sheet S.

Moreover, in the basic example described above, it is preferable that each of the detection devices 20 detects the reference marker M while fixing each of the sensor units 22 in order to prevent the electrode sheet S to be conveyed from being scanned back and forth. By fixing each of the sensor units 22, the detection device 20 is able to detect the reference marker M even in a case where, for example, the reference marker M is only set in the vicinity of the center of the electrode sheet S in the vertical direction of the flow direction of the electrode sheet.

### 3-2-2. Application example

A modification of the reference marker detection process performed by the detection device 20 will be described. As described above with the titles of (3-1. Specific example of reference marker M) and (3-1-2. Modification), in addition to a single piece of marker, the reference marker M may be a plurality of markers that are attached to the measurement object at fixed intervals. At this time, the measurement apparatus 10 collects the detection results of the reference markers M disposed at a plurality of places, calculates each of the inter-device distances associated with the number of set reference markers M obtained in a single conveyance of the measurement object, and calculates an average value of the calculated inter-device distances. At this time, the measurement apparatus 10 reduces an influence of false detection or communication delay caused by noise by excluding a greatly different value.

Moreover, as described above, in a case where the plurality of reference markers M are used, it is preferable to determine in advance an interval of the reference markers M, such as marking seals, to be attached. The reason for this is that, in a case of poor responsiveness of the sensor unit 22, the detection device 20 is not able to correctly detect the reference markers M in a case where the reference markers M are closer each other. Furthermore, the measurement apparatus 10 is also able to exclude a detection result that is greatly different from the other detection results caused by the intervals being determined.

Furthermore, the detection device 20 is able to improve the accuracy of the detection by using not only the detection result of a rising edge of the measurement value of the reference marker M but also the detection result of a falling edge of the measurement value of the reference marker M. In other words, the detection device 20 is not only able to acquire detection results obtained from the detection performed twice by a single piece of the reference marker M, but is also able to determine false detection caused by noise, or the like by figuring out the size of the reference marker M, such as the marking seal, in advance. Furthermore, the detection device 20 exhibits better responsiveness to the falling edge than the rising edge depending on the sensor unit 22, so that it is possible to improve the accuracy of the detection by using the detection result of the falling edge.

### 3-3. Specific example of inter-device distance calculation process performed in the measurement apparatus 10

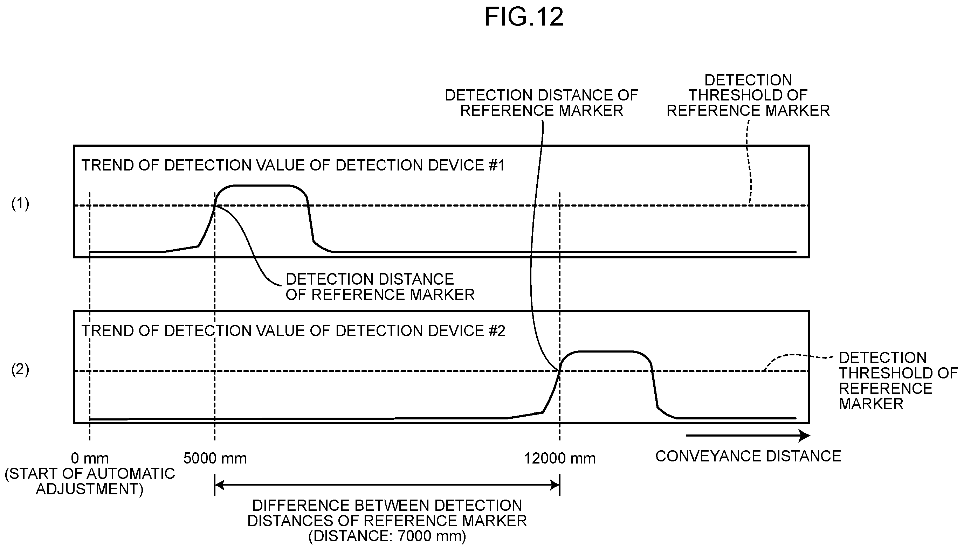

A specific example of the calculation result will be described with reference to FIG. 12. FIG. 12 is a diagram illustrating the specific example of the inter-device distance calculation process performed by the measurement apparatus 10 according to the embodiment. In the following, a basic example, a modification, and an application example of the inter-device distance calculation process performed by the measurement apparatus 10 will be described.

### 3-3-1. Basic example

A basic example of the inter-device distance calculation process performed by the measurement apparatus 10 will be described. In the example illustrated in FIG. 12 (1), the "detection device #1" that is the detection device 20-1 disposed on the upstream side of the coating line detects, in a case where a detection value exceeds a reference marker threshold, "5000 mm" as a detection distance of the reference marker M. Furthermore, in the example illustrated in FIG. 12 (2), the "detection device #2" that is the detection device 20-2 disposed on the downstream side of the coating line detects, in a case where a detection value exceeds the reference marker threshold, "12000 mm" as the detection distance of the reference marker M. Then, the measurement apparatus 10 calculates "7000 mm" that is a difference between "12000 mm" and "5000 mm" as the inter-device distance between the "detection device #2" and the "detection device #1".

### 3-3-2. Modification

A modification of the inter-device distance calculation process performed by the measurement apparatus 10 will be described. In the description described above with the title of (3-3-1. Basic example), the specific example of the inter-device distance calculation process using the detection distance as the detection result has been described, but the measurement apparatus 10 is also able to perform the inter-device distance calculation process using a detection clock time as the detection result as long as a conveyance speed is already known (a conveyance speed is preferably be constant). In the following, two applicable techniques will be described.

### 3-3-2-1. First technique

A first technique used for the inter-device distance calculation process performed by using a detection clock time as a detection result will be described. At a first step, the measurement apparatus 10 causes the internal date and time running in the detection devices 20 to be in synchronization in advance by performing synchronization on the date and time. At a second step, the detection device 20 records the acquisition date and time at which the detection value that exceeds the detection threshold for the reference marker M, such as the marking seal, and transmits the acquired date and time to the measurement apparatus 10. At a third step, the measurement apparatus 10 determines the inter-device distance by multiplying a conveyance speed of the electrode sheet S by a difference with the received date and time.

### 3-3-2-2. Second technique

A second technique used for the inter-device distance calculation process performed by using a detection clock time as a detection result will be described. At a first step, in a case where a detection value exceeds the detection threshold for the reference marker M, such as the marking seal, the detection device 20 immediately notifies the measurement apparatus 10 of this state. At a second step, the measurement apparatus 10 records the notified date and time, and determines the inter-device distance by multiplying a conveyance speed of the electrode sheet S by a difference with the date and time.

### 3-3-3. Application example

An application example of the inter-device distance calculation process performed by the measurement apparatus 10 will be described. In the following, a smoothing process that is a countermeasure against noise performed on the detection value will be described.

In a measurement performed by using measurement light, there may be a case in which a statistical fluctuation occurs in measurement light or a detection value is suddenly changed caused by noise, and a detection value may possibly exceed the detection threshold for the reference marker M, such as the marking seal, at a wrong position or wrong clock time. As a countermeasure against the above described circumstances, the measurement apparatus 10 is also able to perform a smoothing process on the detection value. For example, the measurement apparatus 10 is able to perform the smoothing process by using a moving average, FIR (Finite Impulse Response), or the like with the assumption that the delay time due to the smoothing is constant. Moreover, if the delay time is constant, even if a position in which the reference marker M passes through the detection device 20 or the clock time at which the reference marker M passes through the detection device 20 is deviated from a position to be detected or the detection clock time, it is conceivable that the same amount of deviation occurs in each of the detection devices 20, and thus the above described deviation is able to be ignored.

### 4. Flow of each process performed in coating amount measurement system 100

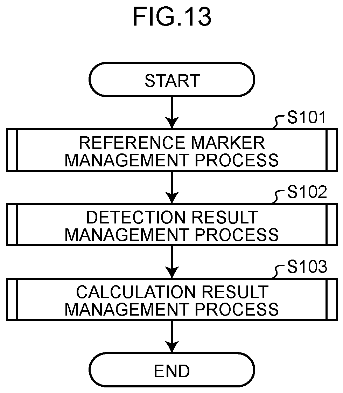

The flow of the processes performed in the coating amount measurement system 100 according to the embodiment will be described with reference to FIG. 13 to FIG. 16. In the following, the overall flow of the process performed in the coating amount measurement system 100 will be described first, and then, a reference marker management process, a detection result management process, and a calculation result management process will be described as each of the processes.

### 4-1. Overall process performed in coating amount measurement system 100

The flow of the overall process performed in the coating amount measurement system 100 according to the embodiment will be described with reference to FIG. 13. FIG. 13 is a flowchart illustrating one example of the overall process performed in the coating amount measurement system 100 according to the embodiment. Moreover, the processes performed at Steps S101 to S103 described below may be performed in different order. Furthermore, some of the processes performed at Steps S101 to S103 described below may be omitted.

### 4-1-1. Reference marker management process

At a first step, the coating amount measurement system 100 performs the reference marker management process (Step S101). For example, by performing the processes at Steps S201 to S203 that will be described later, the coating amount measurement system 100 sets the reference marker M to the electrode sheet S, and sets the detection threshold that indicates a detection condition for the reference marker M.

### 4-1-2. Detection result management process

At a second step, the coating amount measurement system 100 performs the detection result management process (Step S102). For example, by performing the processes at Steps S301 to S305 that will be described later, the coating amount measurement system 100 detects the reference marker M that is set on the electrode sheet S, and collects the detection result that indicates the position in which the reference marker M is detected or a clock time at which the reference marker M is detected.

### 4-1-3. Calculation result management process

At a third step, the coating amount measurement system 100 performs the calculation result management process (Step S103). For example, by performing the processes at Steps S401 to S403 that will be described later, the coating amount measurement system 100 calculates an inter-device distance between the detection devices 20 from the detection result that indicates a detection position or a detection clock time of the reference marker M.

### 4-2. Reference marker management process

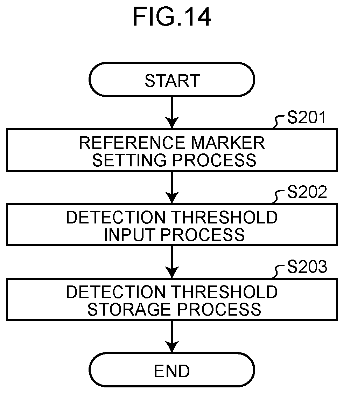

The flow of the reference marker management process according to the embodiment will be described with reference to FIG. 14. FIG. 14 is a flowchart illustrating one example of the flow of the reference marker management process performed in the coating amount measurement system 100 according to the embodiment. Moreover, the processes performed at Steps S201 to S203 described below may be performed in different order. Furthermore, some of the processes performed at Steps S201 to S203 described below may be omitted.

### 4-2-1. Reference marker setting process

At a first step, the worker W performs a reference marker setting process (Step S201). For example, the worker W attaches a marking seal that has a rectangular shape and that has a thickness above a certain level to the electrode sheet S at the time of installation of the detection device 20 in the coating line or at the time of a periodic check. At this time, the reference marker setting process described above may be performed by a setting device that attaches a marking seal, instead of the worker W.

### 4-2-2. Detection threshold input process

At a second step, the worker W performs the detection threshold input process (Step S202). For example, the worker W sets a detection threshold capable for the detection device 20 detecting a thickness of the marking seal, and inputs the set detection threshold to the measurement apparatus 10. The detection threshold input process described above may be omitted in a case where the measurement apparatus 10 stores a detection threshold that has been internally defined.

### 4-2-3. Detection threshold storage process

At a third step, the measurement apparatus 10 performs the detection threshold storage process (Step S203). For example, the measurement apparatus 10 stores the input detection threshold in the detection threshold storage unit 14a.

### 4-3. Detection result management process

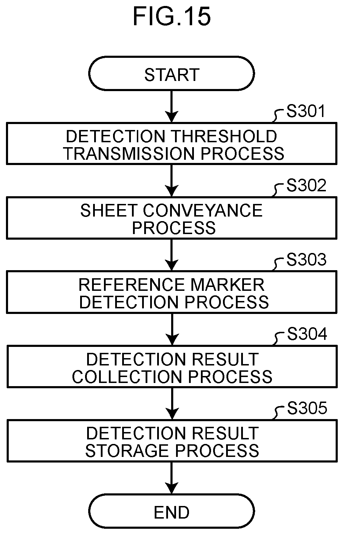

The flow of the detection result management process according to the embodiment will be described with reference to FIG. 15. FIG. 15 is a flowchart illustrating one example of the flow of the detection result management process performed in the coating amount measurement system 100 according to the embodiment. Moreover, the processes performed at Steps S301 to S305 described below may be performed in different order. Furthermore, some of the processes performed at Steps S301 to S305 described below may be omitted.

### 4-3-1. Detection threshold transmission process

At a first step, the measurement apparatus 10 performs the detection threshold transmission process (Step S301). For example, the measurement apparatus 10 transmits the detection threshold stored in the detection threshold storage unit 14a to each of the detection devices 20.

### 4-3-2. Sheet conveyance process

At a second step, the worker W performs the sheet conveyance process (Step S302). For example, the worker W conveys, by operating the roller of the coating line, the electrode sheet S on which a marking seal is attached at a conveyance speed V (m/s) that is a constant speed.

### 4-3-3. Reference marker detection process

At a third step, the detection device 20 performs the reference marker detection process (Step S303). For example, in a case where a detection value exceeds the detection threshold that has been set by the measurement apparatus 10, the detection device 20 detects the marking seal of the conveyed electrode sheet S.

### 4-3-4. Detection result collection process

At a fourth step, the measurement apparatus 10 performs the detection result collection process (Step S304). For example, the measurement apparatus 10 collects, from each of the detection devices 20, as the detection result, the detection distance or the detection clock time of the marking seal attached on the electrode sheet S.

### 4-3-5. Detection result storage process

At a fifth step, the measurement apparatus 10 performs the detection result storage process (Step S305). For example, the measurement apparatus 10 stores, as the detection result, the detection distance or the detection clock time of the marking seal attached on the electrode sheet S in the detection result storage unit 14b.

### 4-4. Calculation result management process

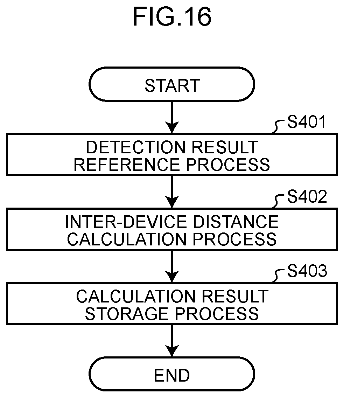

The flow of the calculation result management process according to the embodiment will be described with reference to FIG. 16. FIG. 16 is a flowchart illustrating one example of the flow of the calculation result management process performed in the coating amount measurement system 100 according to the embodiment. Moreover, the processes performed at Steps S401 to S403 described below may be performed in different order. Furthermore, some of the processes performed at Steps S401 to S403described below may be omitted.

### 4-4-1. Detection result reference process

At a first step, the measurement apparatus 10 performs the detection result reference process (Step S401). For example, the measurement apparatus 10 refers to, as the detection result, the detection distance or the detection clock time of the marking seal attached on electrode sheet S stored in the detection result storage unit 14b.

### 4-4-2. Inter-device distance calculation process

At a second step, the measurement apparatus 10 performs the inter-device distance calculation process (Step S402). For example, the measurement apparatus 10 calculates the inter-device distance between the detection devices 20 by using the detection distance or the detection clock time of the marking seal attached on the electrode sheet S.

### 4-4-3. Calculation result storage process

At a third step, the measurement apparatus 10 performs the calculation result storage process (Step S403). For example, the measurement apparatus 10 stores, as the calculation result, the inter-device distance between the detection devices 20 in the calculation result storage unit 14c.

### 5. Effect of embodiment

Lastly, the effects of the embodiment will be described. In the following, a first to an eighth effects corresponding to the processes according to embodiment will be described.

### 5-1. First effect

As a first effect, in the process described above according to the embodiment, the measurement apparatus 10 collects, from each of the detection devices 20 installed in a conveyance direction of the measurement object having the reference marker M, each of the detection results of the reference marker M detected by the respective detection devices 20, and then calculates, on the basis of the collected detection results, an inter-device distance that indicates an interval at which each of the detection devices 20 is installed. As a result of this, in this process, it is possible to simply obtain an installation position of each of the detection devices 20 included in the production line.

### 5-2. Second effect

As a second effect, in the process described above according to the embodiment, each of the detection devices 20 includes the sensor unit 22 that irradiates a measurement object in the form of a sheet with measurement light and that acquires a transmittance intensity of the measurement light. Furthermore, the measurement apparatus 10 collects each of the detection results detected by the sensor units 22 included in the respective detection devices 20. As a result of this, in this process, in a coating amount measurement performed by using the measurement light, it is possible to simply obtain an installation position of each of the detection devices 20 included in the production line.

### 5-3. Third effect

As a third effect, in the process described above according to the embodiment, the measurement apparatus 10 receives the detection threshold for detecting the reference marker M, transmits the received detection threshold to each of the detection devices 20, and collects each of the detection results that have been detected by the respective detection devices 20 in accordance with the detection threshold. As a result of this, in this process, it is possible to simply obtain an installation position of each of the detection devices 20 in which a detection condition for the reference marker M has been set.

### 5-4. Fourth effect

As a fourth effect, in the process described above according to the embodiment, the measurement apparatus 10 collects, as the detection results, each of the detection distances each indicating a total distance of the measurement object that has been conveyed, and calculates a difference between the detection distances of each of the detection devices 20 as the inter-device distance. As a result of this, in this process, it is possible to simply obtain an installation position of each of the detection devices 20 included in the production line on the basis of the distance of the measurement object that has been conveyed.

### 5-5. Fifth effect

As a fifth effect, in the process described above according to the embodiment, the measurement apparatus 10 collects a detection clock time indicating a clock time at which the reference marker M has been detected as a detection result, and calculates, as the inter-device distance, the product of a difference between the detection clock times indicated by the respective detection devices 20 and a conveyance speed indicating a speed at which the measurement object has been conveyed. As a result of this, in this process, it is possible to simply obtain an installation position of each of the detection devices 20 included in the production line on the basis of the detected clock time of the reference marker M.

### 5-6. Sixth effect

As a sixth effect, in the process described above according to the embodiment, the measurement apparatus 10 uses the calculated inter-device distance, and updates a parameter that is used when the measurement object is measured. As a result of this, in this process, it is possible to simply obtain an installation position of each of the detection devices 20 included in the production line, and, in addition, it is possible to automatically adjust the inter-device distance between each of the detection devices 20 at the time of the installation, at the time of a periodic check, or the like of each of the detection devices 20.

### 5-7. Seventh effect

As a seventh effect, in the process described above according to the embodiment, the reference marker M is a marker that is in the form of a seal and that is attached to the measurement object. As a result of this, in this process, by using the marking seal, it is possible to simply obtain an installation position of each of the detection devices 20 included in the production line.

### 5-8. Eighth effect

As an eighth effect, in the process described above according to the embodiment, each of the detection devices 20 is installed in the coating line for coating the measurement object that is in the form of the sheet. As a result of this, in this process, it is possible to simply obtain an installation position of each of the detection devices 20 included in the coating line.

### 6. System

The flow of the processes, the control procedures, the specific names, and the information containing various kinds of data or parameters indicated in the above specification and drawings can be arbitrarily changed unless otherwise stated.

Furthermore, the components of each unit illustrated in the drawings are only for conceptually illustrating the functions thereof and are not always physically configured as illustrated in the drawings. In other words, the specific shape of a separate or integrated device is not limited to the drawings. Specifically, all or part of the device can be configured by functionally or physically separating or integrating any of the units depending on various loads or use conditions.

Furthermore, all or any part of each of the processing functions performed by each of the devices can be implemented by a CPU and by programs analyzed and executed by the CPU or implemented as hardware by wired logic.

### 7. Hardware

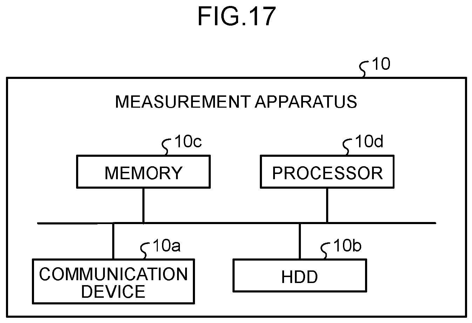

In the following, an example of a hardware configuration of the measurement apparatus 10 will be described. Moreover, the other devices may also have a similar hardware configuration. FIG. 17 is a diagram illustrating an example of a hardware configuration according to the embodiment. As illustrated in FIG. 17, the measurement apparatus 10 includes a communication device 10a, a hard disk drive (HDD) 10b, a memory 10c, and a processor 10d. Furthermore, each of the units illustrated in FIG. 17 is connected by a bus or the like with each other.

The communication device 10a is a network interface card or the like, and performs communication with another server. The HDD 10b stores therein a database and a program that causes the functions illustrated in FIG. 6 to operate.

The processor 10d operates the process that executes each of the functions described above in FIG. 6 or the like by reading the program that executes the same processes as those performed by each of the processing units illustrated in FIG. 6 from the HDD 10b or the like and loading the read program in the memory 10c. For example, the process executes the same functions as those performed by each of the processing units included in the measurement apparatus 10. Specifically, the processor 10d reads, from the HDD 10b or the like, the program having the same functions as those performed by the reception unit 15a, the collection unit 15b, the calculation unit 15c, and the like. Then, executes the same processes as those performed by the reception unit 15a, the collection unit 15b, the calculation unit 15c, and the like.

In this way, the measurement apparatus 10 operates as a device that executes various processing methods by reading and executing the program. Furthermore, the measurement apparatus 10 is also able to implement the same functions as those described above in the embodiment by reading the above described program from a recording medium by a medium reading device and executing the read program. In addition, the program described in this embodiment need not always be executed by the measurement apparatus 10. For example, the present invention may also be similarly applied to a case in which another computer or another server executes the program or in a case in which another computer and another server cooperatively execute the program with each other.

The program may be distributed via a network, such as the Internet. Furthermore, the program may be executed by being recorded in a computer readable medium, such as a hard disk, a flexible disk (FD), a CD-ROM, a magneto-optical disk (MO), or a digital versatile disk (DVD), and being read from the recording medium by the computer.

According to the present invention, it is possible to simply obtain an installation position of each of the detection devices included in the production line.

## Claims

1. A measurement apparatus (10) comprising:
a collection unit (15b) that collects, from each of detection devices (20) installed in a conveyance direction of a measurement object having a reference marker (M), each of detection results of the reference marker (M) detected by the respective detection devices (20); and
a calculation unit (15c) that calculates, based on the collected detection results, an inter-device distance that indicates an interval at which each of the detection devices (20) is installed.

2. The measurement apparatus (10) according to claim 1, wherein
each of the detection devices (20) includes a sensor unit (22) that irradiates the measurement object in a form of a sheet with measurement light, and that acquires a transmittance intensity of the measurement light, and
the collection unit (15b) collects each of the detection results detected by the sensor units (22) included in the respective detection devices (20).

3. The measurement apparatus (10) according to claim 1 or 2, further comprising a reception unit (15a) that receives a detection threshold for detecting the reference marker (M), and that transmits the received detection threshold to each of the detection devices (20), wherein
the collection unit (15b) collects each of the detection results detected by the respective detection devices (20) in accordance with the detection threshold.

4. The measurement apparatus (10) according to any one of claims 1 to 3, wherein
the collection unit (15b) collects, as the detection results, each of detection distances each indicating a total distance of the measurement object that has been conveyed, and
the calculation unit (15c) calculates a difference between the detection distances of each of the detection devices (20) as the inter-device distance.

5. The measurement apparatus (10) according to any one of claims 1 to 4, wherein
the collection unit (15b) collects, as the detection results, each of detection clock times each indicating a clock time at which the reference marker (M) is detected, and
the calculation unit (15c) calculates, as the inter-device distance, a product of a difference between the detection clock times indicated by the respective detection devices (20) and a conveyance speed indicating a speed at which the measurement object has been conveyed.

6. The measurement apparatus (10) according to any one of claims 1 to 5, wherein
the calculation unit (15c) uses the calculated inter-device distance, and updates a parameter that is used when the measurement object is measured.

7. The measurement apparatus (10) according to any one of claims 1 to 6, wherein
the reference marker (M) is a marker that is in the form of a seal and that is attached to the measurement object.

8. The measurement apparatus (10) according to any one of claims 1 to 7, wherein
each of the detection devices (20) is installed in a coating line for coating the measurement object that is in the form of the sheet.

9. A measurement method that causes a computer (10) to execute a process comprising:
collecting, from each of detection devices (20) installed in a conveyance direction of a measurement object having a reference marker (M), each of detection results of the reference marker (M) detected by the respective detection devices (20); and
calculating based on the collected detection results, an inter-device distance that indicates an interval at which each of the detection devices (20) is installed.

10. A measurement program that causes a computer (10) to execute a process comprising:
collecting, from each of detection devices (20) installed in a conveyance direction of a measurement object having a reference marker (M), each of detection results of the reference marker (M) detected by the respective detection devices (20); and
calculating based on the collected detection results, an inter-device distance that indicates an interval at which each of the detection devices (20) is installed.
